# EUROPÄISCHE PATENTANMELDUNG

(11) **EP 3 679 820 A2**
(43) Veröffentlichungstag der Anmeldung: **15.07.2020**
(21) Anmeldenummer: 20170674.4
(22) Anmeldetag: 21.04.2020
(51) Int. Cl.: A41D 13/11

(54) **GESICHTSSCHUTZ**

(30) Priorität: 30.03.2020 AT 5006920 U
(71) Anmelder: Tiedemann, Roman, 1232 Wien (AT)
(72) Erfinder: Tiedemann, Roman, 1232 Wien (AT)
(74) Vertreter: Beer & Partner Patentanwälte KG

(57) **Zusammenfassung**

Ein Gesichtsschutz weist eine Schutzscheibe (2) auf, die eine Innenfläche (4), die bei Verwendung zum Gesicht hin gerichtet ist, eine Außenfläche (5), die bei Verwendung vom Gesicht weg gerichtet ist, sowie einen oberen Randbereich (6) und Seitenrandbereiche (7) auf. Die Innenfläche (4) weist wenigstens einen Anlagebereich im Bereich des oberen Randbereiches (6) auf, und der Anlagebereich weist wenigstens einen aus der Schutzscheibe (2) ausgeformten, sich über die Innenfläche (4) erhebenden Vorsprung (9) auf, der im Verwendungszustand am Gesicht, insbesondere im Bereich der Stirn, anlegbar ist.

## Beschreibung

Die Erfindung betrifft einen Gesichtsschutz mit einer gegebenenfalls gebogenen Schutzscheibe, die eine Innenfläche, die bei Verwendung zum Gesicht hin gerichtet ist, eine Außenfläche, die bei Verwendung vom Gesicht weg gerichtet ist, sowie einen oberen Randbereich und Seitenrandbereiche aufweist.

Derartige Schutzeinrichtungen sind im Stand der Technik bekannt, haben jedoch den Nachteil, dass eine Halterung erforderlich ist, mit der die Schutzscheibe am Kopf getragen und im Abstand zum Gesicht gehalten wird, wobei die Herstellung der Halterung und die Montage der Halterung an der Schutzscheibe aufwändig und teuer ist.

Der Erfindung liegt daher die Aufgabe zugrunde, einen Gesichtsschutz zur Verfügung zu stellen, der sehr einfach, schnell und damit günstig herstellbar ist.

Gelöst wird diese Aufgabe mit einem Gesichtsschutz der eingangs genannten Art dadurch, dass die Innenfläche wenigstens einen Anlagebereich im Bereich des oberen Randbereiches aufweist, und dass der Anlagebereich wenigstens einen aus der Schutzscheibe ausgeformten, sich über die Innenfläche erhebenden Vorsprung aufweist, der im Verwendungszustand am Gesicht, insbesondere im Bereich der Stirn, anlegbar ist.

Durch den wenigstens einen Vorsprung - bei bevorzugten Ausführungsformen der Erfindung weist die Schutzscheibe im Anlagebereich zwei, drei oder mehr aus der Schutzscheibe ausgeformte, sich über die Innenfläche erhebende Vorsprünge auf - liegt die Schutzscheibe nicht großflächig, sondern nur mit dem oder den Vorsprüngen am Gesicht oder der Stirn an, wodurch sie angenehm zu tragen ist. Es ist auch keine aufwändige Halterung, mit der die Schutzscheibe am Kopf gehalten wird, erforderlich, sondern die Schutzscheibe kann gemäß einer bevorzugten Ausführungsform der Erfindung auf sehr einfache und günstige Weise mit einem elastischen Band, z.B. einem Gummiband, am Kopf befestigt werden.

Die Schutzscheibe besteht in einer bevorzugten Ausführungsform der Erfindung aus einem plastisch verformbaren Material, vorzugsweise aus einem thermoplastischen Kunststoff, insbesondere einem Polycarbonat, das relativ kratzfest ist, wobei die Vorsprünge durch Tiefziehen hergestellt werden können. Damit lassen sich hohe Stückzahlen günstig herstellen. Alternative Arten der Herstellung, beispielsweise durch Spritzgießen aus einem Thermoplast oder anderen Werkstoffen, sind natürlich ebenso möglich.

Für die Anzahl, Anordnung und Ausrichtung des oder der Vorsprünge gibt es im Rahmen der Erfindung viele Möglichkeiten, die in unterschiedlichen Varianten und Ausführungsformen ohne Einschränkung miteinander kombiniert werden können.

Bevorzugt ist bei der Erfindung allerdings, wenn wenigstens ein Vorsprung, vorzugsweise zwei oder drei Vorsprünge, im Bereich eines mittleren Drittels des oberen Randbereiches und wenigstens ein Vorsprung in jedem Seitenrandbereich angeordnet ist. Der Vorteil dieser Ausführungsform liegt darin, dass der oder die Vorsprünge im Mittelbereich für einen sicheren Halt an der Stirn und die Vorsprünge im Seitenrandbereich, die an den Schläfen und/oder den Wangenknochen anliegen können, für eine Sicherung gegen Kippen der Schutzscheibe sorgen.

Die Sicherung gegen ein Kippen der Schutzscheibe kann beispielsweise dadurch weiter verbessert werden, dass im Seitenrandbereich zwei Vorsprünge angeordnet sind, die, vorzugsweise im Abstand voneinander angeordnet, übereinander liegen. Diese Ausführungsform hat auch den Vorteil, dass, wenn der erfindungsgemäße Gesichtsschutz von Brillenträgern benutzt wird, die Brillenbügel zwischen den beiden übereinander liegenden Vorsprüngen Platz finden.

Alternativ oder zusätzlich ist es im Rahmen der Erfindung auch möglich, dass sich wenigstens ein Vorsprung im Wesentlichen in Richtung der Längserstreckung des oberen Randbereichs erstreckt, und dass der oder die parallel zum oberen Randbereich angeordneten Vorsprung/Vorsprünge im Bereich der seitlichen Ränder nach unten, im Wesentlichen parallel zu den Seitenrändern erstreckende Abschnitte aufweist/aufweisen.

Soweit die Geometrie der Vorsprünge betroffen ist, ist es gemäß einer weiteren, selbstverständlich aber nicht zwingenden, Ausführungsform möglich, dass wenigstens ein in einem Seitenrandbereich angeordneter Vorsprung eine in Richtung der Längserstreckung des Seitenrandbereiches gemessene Länge aufweist, die größer als eine quer zur Längserstreckung des oberen Randbereiches gemessene Länge wenigstens eines im oberen Randbereich angeordneten Vorsprunges ist. Dadurch kann ebenfalls die Kippstabilität verbessert werden.

Weitere bevorzugte Ausführungsformen der Erfindung sind Gegenstand der übrigen Unteransprüche.

Weitere Merkmale und Vorteile der Erfindung ergeben sich aus der nachfolgenden Beschreibung bevorzugter, den Schutzbereich nicht beschränkender, Ausführungsbeispiele der Erfindung unter Bezugnahme auf die angeschlossenen Zeichnungen. Es zeigt:
- Fig. 1: eine erste Ausführungsform eines erfindungsgemäßen Gesichtsschutzes,
- Fig. 2: den Gesichtsschutz von Fig. 1 in der Trageposition an einem symbolisch dargestellten Kopf,
- Fig. 3: eine zweite, ähnliche Ausführungsform eines erfindungsgemäßen Gesichtsschutzes,
- Fig. 4: den Gesichtsschutz von Fig. 2 in einer Ansicht von oben,
- Fig. 5: eine dritte Ausführungsform eines erfindungsgemäßen Gesichtsschutzes,
- Fig. 6: den Gesichtsschutz von Fig. 5 in einer Ansicht von oben,
- Fig. 7: eine vierte Ausführungsform eines erfindungsgemäßen Gesichtsschutzes,
- Fig. 8: den Gesichtsschutz von Fig. 7 in einer Ansicht von unten.

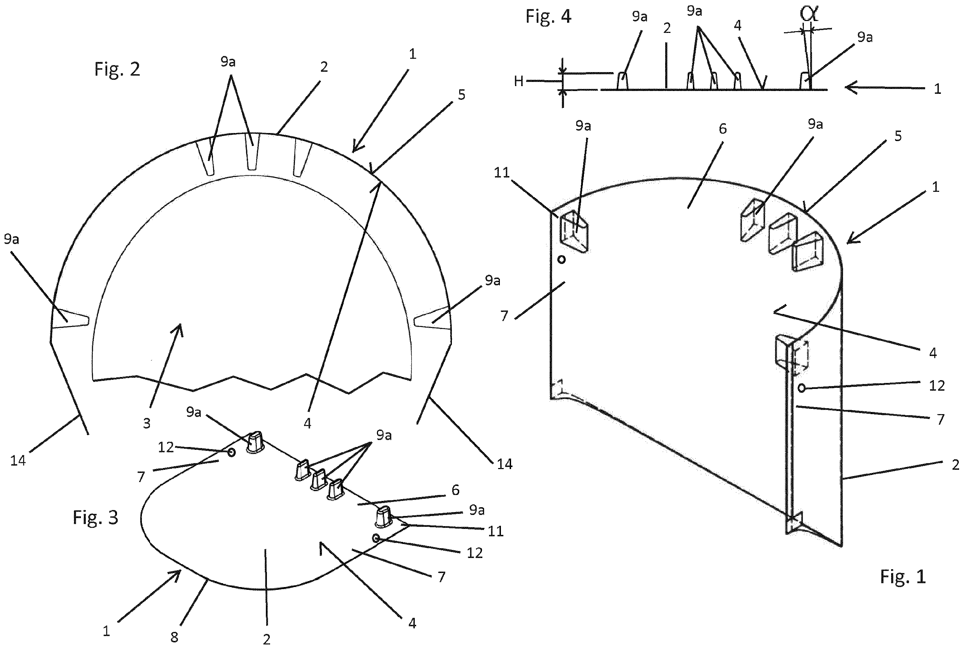

In Fig. 1 ist eine erste Ausführungsform eines erfindungsgemäßen Gesichtsschutzes 1 dargestellt, der eine Schutzscheibe 2 aufweist, die im Lieferzustand vorzugsweise flach ist, gegebenenfalls aber auch gebogen sein kann, sich in dem Zustand, in dem sie getragen wird, aber jedenfalls elastisch an die Gesichtsform, insbesondere an die Form der Stirn, anpasst, wie in Fig. 2 am symbolisch dargestellten Kopf 3 zu erkennen ist.

Die Schutzscheibe 2 weist eine Innenfläche 4, die bei Verwendung zum Gesicht bzw. Kopf 3 hin gerichtet ist, eine Außenfläche 5, die bei Verwendung vom Gesicht bzw. Kopf 3 weg gerichtet ist, sowie einen oberen Randbereich 6 und Seitenrandbereiche 7 auf. Die Schutzscheibe 2 weist des Weiteren einen unteren Rand 8 auf.

An der Innenfläche 4 ist wenigstens ein Vorsprung 9a angeordnet, der sich über die Innenfläche 4 erhebt und beim Tragen des Gesichtsschutzes 1 am Gesicht, insbesondere an der Stirn, anliegt.

Die in den Fig. 1 bis 6 dargestellten Ausführungsformen weisen im Mittelbereich, insbesondere im mittleren Drittel des oberen Randbereiches 6, drei Vorsprünge 9a, 9b, 9c auf. Es könnte aber auch nur ein einziger, gegebenenfalls in Richtung der Längserstreckung ausgerichteter, länglicher Vorsprung, oder mehr als drei Vorsprünge vorgesehen sein, die sich gegebenenfalls im Wesentlichen über die gesamte Länge des oberen Randbereiches 6 erstrecken.

Die Form der Vorsprünge ist beispielsweise pyramidenstumpfförmig, keilförmig, kegelstumpfförmig oder elliptisch mit einer sich von der Innenfläche 4 weg verjüngenden Querschnittsform, wobei die Länge der Vorsprünge 9a, 9b, 9c unterschiedlich sein kann. Die Ecken und Kanten sind bevorzugt gut abgerundet, was nicht nur die Herstellung erleichtert, sondern auch den Tragkomfort erhöht.

Die sich von der Innenfläche 4 weg verjüngende Querschnittsform hat einerseits den Vorteil, dass sich die Schutzscheibe 2 bei der Herstellung leichter entformen lässt, und andererseits den Vorteil, dass sich die Schutzscheiben 2 für die Lagerung und den Transport leichter stapeln lassen, weil die Vorsprünge ineinandergreifen können. Dabei hat sich ein Neigungswinkel α der Seitenwände der Vorsprünge von wenigstens 3° bewährt.

Die Schutzscheiben 2 sind vorzugsweise durch Tiefziehen aus einem plastisch verformbaren Material, vorzugsweise aus einem thermoplastischen Kunststoff, insbesondere einem Polycarbonat, hergestellt, wobei durch den Tiefziehvorgang die Vorsprünge 9a aus dem ursprünglich flachen Ausgangsmaterial ausgeformt werden.

Im Rahmen der Erfindung liegt die Wandstärke der Schutzscheibe bevorzugt zwischen 0,2 mm und 1,5 mm, wenngleich größere oder kleiner Wandstärken natürlich auch möglich sind. Idealerweise beträgt die Wandstärke der Schutzscheibe 2 ≥ 0,3 mm und ≤ 1,0 mm, insbesondere ≥ 0,35 mm und ≤ 0,7 mm. Bei diesen Wandstärken ist einerseits eine ausreichende Bruchfestigkeit und andererseits eine ausreichende Elastizität gegeben, damit sich die Schutzscheibe 2 an die Kopfform anpassen kann.

In den Figuren sind verschiedene, bevorzugte Ausführungsformen der Anordnung und Geometrie der Vorsprünge dargestellt, die im Rahmen der Erfindung beliebig miteinander und auch mit anderen, in den Zeichnungen nicht dargestellten Ausführungsformen kombiniert werden können.

Bei den Ausführungsformen der Fig. 1 bis 4 sind beispielsweise im Mittelbereich des oberen Randbereiches 6 drei Vorsprünge 9a angeordnet, die etwa eine quer zur Längserstreckung des oberen Randbereiches 6 gemessene Länge L1 von 20 mm und eine Breite B von 8 mm haben. Im Bereich der oberen Ecken 11, also dort, wo der obere Randbereich 6 in die Seitenrandbereiche 7 übergeht, sind ebenfalls aus der Schutzscheibe ausgeformte Vorsprünge 9a angeordnet. Die mittleren Vorsprünge 9a haben beispielsweise einen Abstand von 20 mm, damit ein ausreichender Belüftungsstrom zwischen diesen gewährleistet ist.

Für eine ausreichende Belüftung ist weiters auch dann gesorgt, wenn die Vorsprünge 9 eine Höhe H von 5 mm bis 40 mm, vorzugsweise von 10 mm bis 20 mm, haben.

Knapp unterhalb der in den Ecken 11 angeordneten Vorsprünge sind Befestigungsstellen in Form von Löchern 12 angebracht, in denen ein Haltemittel 14, beispielsweise ein Gummiband, eingehakt oder eingefädelt werden können.

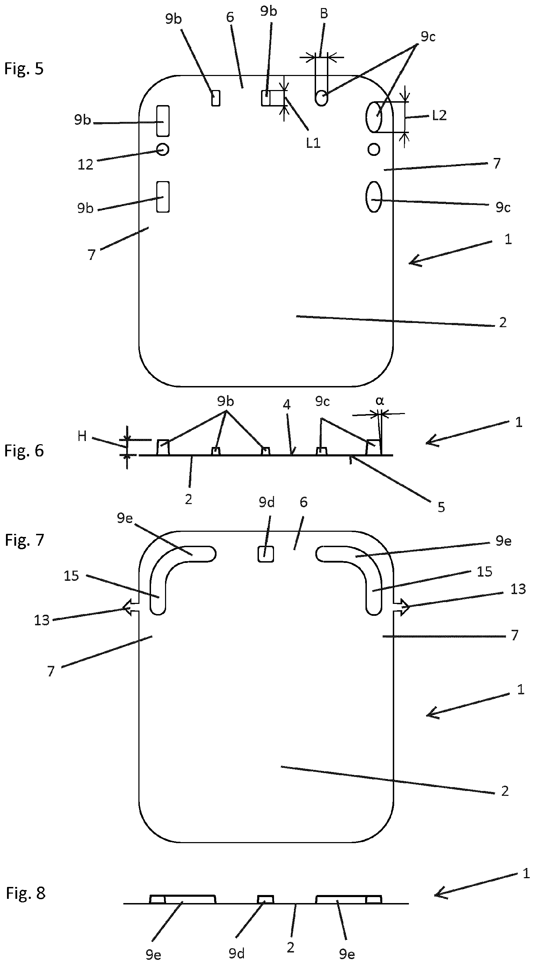

In den Ausführungsformen der Fig. 5 bis 8 ist nicht nur eine andere Grundform der Schutzscheibe 2 dargestellt, sondern es sind auch andere Formen und Anordnungen von Vorsprüngen 9b, 9c, 9d, 9e gezeigt.

In der in den Fig. 5 und 6 dargestellte Ausführungsform sind in der linken Hälfte beispielhaft im Grundriss im Wesentlichen rechteckförmige Vorsprünge 9b gezeigt, wogegen in der rechten Hälfte im Grundriss etwa ellipsenförmige Vorsprünge 9c gezeigt sind. Die Querschnittsform der Vorsprünge kann bei einer Ausführungsform einer Schutzscheibe 2 bei allen Vorsprüngen gleich sein, es können aber bei einer Ausführungsform einer Schutzscheibe auch unterschiedliche Querschnittsformen in unterschiedlichen Bereichen vorhanden sein.

In den Seitenrandbereichen 7 der Ausführungsform von Fig. 5 und 6 befinden sich außerdem zwei übereinander liegende Vorsprünge 9b, 9c, die im Vergleich zu den mittigen Vorsprüngen 9b, 9c nach unten versetzt sind. Außerdem ist die Länge L2 der seitlichen Vorsprünge 9b, 9c etwa doppelt so groß (beispielsweise 30 mm oder 40 mm), wie die Länge L1 der mittigen Vorsprünge 9b, 9c (beispielsweise 15 mm oder 20 mm). Die seitlichen Vorsprünge 9b, 9c können (müssen aber nicht) breiter als die mittigen Vorsprünge 9b, 9c sein.

In den Fig. 5 und 6 ist weiters gezeigt, dass die Vorsprünge 9b, 9c in den Seitenrandbereichen 7 eine größere Höhe H als die mittigen Vorsprünge 9b, 9c im oberen Randbereich 6 haben können.

In den Fig. 7 und 8 ist eine Ausführungsform der Erfindung gezeigt, bei der in der Mitte des oberen Randbereiches 6 ein kurzer Vorsprung 9d und im Bereich des linken und rechten Endes des oberen Randbereiches 6 längliche Vorsprünge 9e angeordnet sind, die sich in Richtung der Längserstreckung des oberen Randbereichs 6 erstrecken. Die seitlichen Vorsprünge 9e weisen im Bereich der seitlichen Ränder sich nach unten, im Wesentlichen parallel zu den Seitenrändern erstreckende, Abschnitte 15 auf.

Schließlich ist in der in den Fig. 7 und 8 dargestellten Ausführungsform auch noch eine andere Möglichkeit von Befestigungsstellen in Form von etwa pfeilförmigen Ansätzen 13 dargestellt, an denen beispielsweise ein Gummiband 14 befestigt werden kann.

### Bezugszeichenliste:

- 1: Gesichtsschutz
- 2: Schutzscheibe
- 3: Kopf
- 4: Innenfläche
- 5: Außenfläche
- 6: oberer Randbereich
- 7: Seitenrandbereiche
- 8: unterer Rand
- 9: Vorsprünge
- 10: --
- 11: Ecken
- 12: Löcher
- 13: pfeilförmigen Ansätzen
- 14: Gummiband
- 15: Abschnitte

## Patentansprüche

1. Gesichtsschutz mit einer gegebenenfalls gebogenen Schutzscheibe (2), die eine Innenfläche (4), die bei Verwendung zum Gesicht hin gerichtet ist, eine Außenfläche (5), die bei Verwendung vom Gesicht weg gerichtet ist, sowie einen oberen Randbereich (6) und Seitenrandbereiche (7) aufweist, **dadurch gekennzeichnet, dass** die Innenfläche (4) wenigstens einen Anlagebereich im Bereich des oberen Randbereiches (6) aufweist, und dass der Anlagebereich wenigstens einen aus der Schutzscheibe (2) ausgeformten, sich über die Innenfläche (4) erhebenden Vorsprung (9) aufweist, der im Verwendungszustand am Gesicht, insbesondere im Bereich der Stirn, anlegbar ist.

2. Gesichtsschutz nach Anspruch 1, **dadurch gekennzeichnet, dass** die Schutzscheibe (2) im Anlagebereich zwei, drei oder mehr aus der Schutzscheibe (2) ausgeformte, sich über die Innenfläche (4) erhebende Vorsprünge (9) aufweist, dass vorzugsweise wenigstens ein Vorsprung (9) im Bereich eines mittleren Drittels des oberen Randbereiches (6) angeordnet ist, und dass vorzugsweise wenigstens ein Vorsprung (9) in jedem Seitenrandbereich (7) angeordnet ist.

3. Gesichtsschutz nach Anspruch 2, **dadurch gekennzeichnet, dass** wenigstens ein in einem Seitenrandbereich (7) angeordneter Vorsprung (9) eine in Richtung der Längserstreckung des Seitenrandbereiches (7) gemessene Länge (L2) aufweist, die größer als eine quer zur Längserstreckung des oberen Randbereiches (6) gemessene Länge (L1) wenigstens eines im oberen Randbereich (6) angeordneten Vorsprunges (9) ist.

4. Gesichtsschutz nach Anspruch 2 oder 3, **dadurch gekennzeichnet, dass** im Seitenrandbereich (7) zwei Vorsprünge (9) angeordnet sind, die, vorzugsweise im Abstand voneinander angeordnet, übereinander liegen.

5. Gesichtsschutz nach einem der Ansprüche 1 bis 4, **dadurch gekennzeichnet, dass** sich wenigstens ein Vorsprung (9) im Wesentlichen in Richtung der Längserstreckung des oberen Randbereichs (6) erstreckt.

6. Gesichtsschutz nach Anspruch 5, **dadurch gekennzeichnet, dass** der parallel zum oberen Randbereich (6) angeordnete Vorsprung (9) einen Abschnitt aufweist, der sich am Seitenrandbereich (7) vom oberen Randbereich (6) weg nach unten erstreckt.

7. Gesichtsschutz nach einem der Ansprüche 1 bis 6, **dadurch gekennzeichnet, dass** die Vorsprünge (9) mit einer Höhe (H) von 5 mm bis 40 mm, vorzugsweise von 10 mm bis 20 mm, von der Innenfläche (4) weg ragen.

8. Gesichtsschutz nach einem der Ansprüche 2 bis 7, **dadurch gekennzeichnet, dass** wenigstens ein Vorsprung (9) an den Seitenrandbereichen (7) eine in Richtung der Längserstreckung des Seitenrandbereiches (7) gemessene Länge (L2) mehr als 15 mm, insbesondere von ca. 20 mm bis 40 mm aufweist, und/oder dass wenigstens ein Vorsprung (9) im oberen Randbereich (6) eine quer zur Längserstreckung des oberen Randbereiches (6) gemessene Länge (L1) von mehr als 5 mm, insbesondere von ca. 10 mm bis 30 mm, aufweist.

9. Gesichtsschutz nach einem der Ansprüche 1 bis 8, **dadurch gekennzeichnet, dass** die Schutzscheibe (2) eine Wandstärke zwischen 0,2 mm und 1,5 mm, bevorzugt ≥ 0,3 mm und ≤ 1,0 mm, insbesondere ≥ 0,35 mm und ≤0,7 mm, aufweist.

10. Gesichtsschutz nach einem der Ansprüche 1 bis 9, **dadurch gekennzeichnet, dass** die Vorsprünge (9) eine sich von der Innenfläche (4) weg verjüngende Querschnittsform aufweisen, und dass Seitenwände der Vorsprünge (9) vorzugsweise in einem Winkel (α) von mehr als 3° zueinander geneigt sind.

11. Gesichtsschutz nach einem der Ansprüche 1 bis 10, **dadurch gekennzeichnet, dass** die Schutzscheibe (2) an den Seitenrandbereichen (7) Befestigungsstellen, vorzugsweise Ausnehmungen (12) oder Ansätze (13), für ein Haltemittel, wie ein elastisches Band (14), aufweist.

12. Gesichtsschutz nach Anspruch 11, **dadurch gekennzeichnet, dass** an den Befestigungsstellen ein Haltemittel, wie ein elastisches Band (14), angeordnet sind.

13. Gesichtsschutz nach einem der Ansprüche 1 bis 12, **dadurch gekennzeichnet, dass** die Schutzscheibe (2) einstückig ausgeführt ist und vorzugsweise aus einem plastisch verformbaren Material, insbesondere aus einem thermoplastischen Kunststoff, insbesondere einem Polycarbonat, besteht.

14. Gesichtsschutz nach einem der Ansprüche 1 bis 13, **dadurch gekennzeichnet, dass** der oder die Vorsprünge (9) durch Tiefziehen hergestellt ist/sind.

15. Gesichtsschutz nach einem der Ansprüche 1 bis 13, **dadurch gekennzeichnet, dass** die Schutzscheibe (2) durch Spritzgießen hergestellt ist.
